# EUROPEAN PATENT SPECIFICATION

(11) **EP 3 283 215 B1**
(45) Date of publication and mention of the grant of the patent: **19.02.2020**
(21) Application number: 16720742.2
(22) Date of filing: 18.04.2016
(51) Int. Cl.: B01J 20/04, B01J 20/20, B01J 20/32, F25B 17/08

(54) **MATERIAL FOR A CHEMICAL HEAT PUMP**
MATERIAL FÜR EINE CHEMISCHE WÄRMEPUMPE
MATÉRIAU POUR POMPE À CHALEUR CHIMIQUE

(30) Priority: 16.04.2015 SE 1550456
(43) Date of publication of application: 21.02.2018
(73) Proprietor: SaltX Technology AB, 129 44 Hägersten (SE)
(72) Inventor: BOLIN, Göran, SE- 183 30 Täby (SE); TORNEREFELT, Ulrika, SE-115 38 Stockholm (SE)
(74) Representative: Ström & Gulliksson AB
(86) International application number: PCT/EP2016/058512
(87) International publication number: WO 2016/166364

(56) References cited:
- WO-A1-2007/139476
- WO-A1-2011/133093
- WO-A1-2012/118437
- WO-A1-2017/042383
- DE-A1-102011 109 457
- US-A- 6 033 506
- US-A1- 2014 042 390
- US-A1- 2014 116 640
- US-A1- 2014 183 415

## Description

### Technical field

The present invention relates generally to an improved material intended for use in a chemical heat pump involving a sorption process. The material comprises flakes of graphene and/or graphene oxide.

### Background

Chemical heat pumps, in particular chemical heat pumps working according to the sorption principle typically comprise at least one salt and at least one volatile liquid. The operation principle is often based on reversible absorption and desorption of a volatile liquid (examples include water, an alcohol, ammonia, and hydrogen) in and from a solid (such as a salt or an oxide). Absorption of the gas phase of a volatile liquid is typically an exothermic process delivering heat, whereas desorption of the gas phase of a volatile liquid typically is endothermic and requires energy input. The specific solid/gas couple i.e. the specific at least one salt or oxide and at least one volatile liquid determines the temperature range in which the chemical heat pump works. The working cycle of such a chemical heat pump is typically conducted in a discontinuous way with a batch cycle.

A system typically comprises a condenser/evaporator and a reactor (absorber/desorber), both exchanging heat with surrounding systems. Vapor and/or a gas phase of a volatile liquid is able to flow between the reactor (absorber/desorber) and the condenser/evaporator.

When the volatile liquid (for instance water or another substance(s)) in gas phase is absorbed in the active substance (typically a salt or an oxide) the active substance will at first still remain in solid phase and then as more volatile liquid is absorbed gradually turn into liquid phase. The process when the active substance becomes liquid by absorption of the volatile liquid is called liquefaction.

In a system where a salt or an oxide is the active substance into which a volatile liquid absorbs, the chemical heat pump can be improved by providing a matrix in which the active substance is held.

In a chemical heat pump described in WO 2007/139476 there is described that in the reactor part a matrix is provided for the active substance so that the active substance both in its solid state and its liquid state or its solution phase is held or carried by or bonded to the matrix. The matrix is advantageously an inert material such as aluminum oxide and has pores, which are permeable for the volatile liquid and in which the active substance is located. In particular, a material can be used that has a surface or surfaces, at which the active substance can be bonded in the liquid state thereof.

By using a matrix which holds the active substance a number of different advantages are obtained.

The matrix does not participate in the process of absorbing the volatile liquid; it acts as a support and holds the active substance. The active substance absorbs the volatile liquid. The active substance is held by the matrix by different forces in different embodiments examples include capillary force, van der Waal forces etc.

T.X. Li, R.Z. Wang, R.G. Oliveira, J.K. Kiplagat, and L.W. Wang in International Journal of Refrigeration 32 (2009) 47-57 disclose that the COP can be increased. It is mentioned in the introduction that expanded graphite can be used as an additive to improve the heat and mass transfer. In the experimental section it is mentioned that the reactors are composite compounds of metallic salts and expanded graphite. Expanded graphite is said to enhance heat and mass transfer. A high temperature salt as well as a low temperature salt in different reactors is involved in both receiving and absorbing heat during two different phases.

US 6,033,506 discloses a process for making carbon foam. The process employs mesophase or isotropic pitch and a simplified process using a single mold. The foam has a relatively uniform distribution of pore sizes and a highly aligned graphic structure in the struts. The foam material can be made into a composite which is useful in high temperature sandwich panels for both thermal and structural applications, such as described in US2014/0116640 A1.

Expanded graphite can be made by immersing natural flake graphite in a bath of acid, such as chromic acid and then concentrated sulfuric acid, which forces the crystal lattice planes apart, thus expanding the graphite.

WO2017/042383 discloses a mixture for use in a chemical heat pump, comprising graphene flakes and lithium iodide trihydrate.

WO 2012/118437 discloses a particle comprising an inner part of a salt and/or CaO and an outer coating with hydrophobic nanoparticles. It is also disclosed that the nanoparticles can comprise hydrophobically modified SiO₂ particles together with carbon material. Examples of carbon material include graphite and graphene and it is mentioned that carbon material can improve the heat conduction. The coating always comprise hydrophobic nanoparticles.

Although the particles coated with hydrophobic nanoparticles are promising there is a problem with mechanical stability in the long term and that the nanoparticle coating creates a dust. Further the hydrophobic nanoparticles in the outer coating have an undesired insulating effect. The mechanical strength can be improved for better long term performance.

Although chemical heat pumps with a matrix as described above (for instance in WO 2007/139476) are very useful and are successfully used today there is still room for an improvement. For instance the heat transfer to and from the active substance can be further improved, also in view of the active substance coated with nanoparticles disclosed in WO 2012/118437. Also the ability of the matrix to hold a liquefied salt can be improved to prevent the active substance to escape from the matrix. Further the mechanical strength of the matrix is always desirable to improve. It is also desirable to improve the power density, cooling power and the COP.

On a more detailed level it is a problem how to further improve the heat transfer to and from the active substance in a chemical heat pump involving a sorption process.

An undesired effect in chemical heat pumps is migration of the active substance typically occurring in heat pumps involving a matrix holding the active substance. There is for instance thermally induced migration, where the active substance (for instance a salt) is concentrated in parts where the temperature is higher, due to capillary transport of the active substance in solution phase towards those parts. A similar effect is gravitationally induced migration. There is also migration of the active substance carried by a gas phase. In particular if the velocity of the gas is high, small liquid droplets comprising active substance may follow with the stream of gas and contaminate parts of the chemical heat pump.

### Summary

It is an object of the present invention to obviate at least some of the disadvantages in the prior art and provide an improved matrix for a chemical heat pump.

In a first aspect there is provided a material as defined in claim 1 for use in a chemical heat pump, the material comprises an active substance, and allows transport of a volatile liquid in gas phase to and from at least a part of the active substance, wherein at least a part of the material is in thermal contact with the surroundings, wherein the material comprises flakes of at least one selected from the group consisting of graphene and graphene oxide, wherein each individual flake has a lateral size in the range 100-10000 nm and a thickness in the range 0.34 to 5 nm.

In a second aspect there is provided a chemical heat pump, said chemical heat pump comprising:
a reactor part,
an evaporator/condenser part and
a passage connecting the reactor part and the evaporator/condenser part with each other allowing for exchange of gas between the reactor part and the evaporator/condenser part,
a volatile liquid residing inside the reactor part, the evaporator/condenser part and the passage, and
at least one active substance at least in the reactor part,
wherein the volatile liquid is adapted to be absorbed by the active substance at a first temperature and be desorbed by the active substance at a second higher temperature,
wherein the material as described above is at least in the reactor part, said material holds the active substance both in solid phase and in a liquid solution together with volatile liquid.

In a third aspect there is provided a chemical heat pump, said chemical heat pump comprising:
a first storage compartment and a second storage compartment, said first and second storage compartments being adapted to store the material as described above,
at least one reaction compartment adapted to transfer heat to and from the material, said at least one reaction compartment being adapted to receive volatile liquid released from the material during transfer of heat to the material and said at least one reaction compartment being adapted to distribute volatile liquid to the during transfer of heat from the material,
a transport means adapted to transport the material from the first storage compartment to the at least one reaction compartment and from the at least one reaction compartment to the second storage compartment, and from the second storage compartment to the at least one reaction compartment and from the at least one reaction compartment to the first storage compartment.

In a fourth aspect there is provided a method for manufacturing the material as described above, the method comprising the steps of:
providing an active substance
coating said active substance with flakes of at least one selected from the group consisting of graphene and graphene oxide.

Further aspects and embodiments are defined in the appended claims.

One advantage is that the heat transfer to and from the active substance of a chemical heat pump is improved. The direct contact of graphene and/or graphene oxide with the active substance greatly improves the heat conduction.

Another advantage is that the mechanical strength is improved.

Yet another advantage is that various types of migration is reduced or even eliminated. For instance thermally induced migration is reduced because of the improved heat conduction of graphene. Gravitational migration is reduced because of the cells that hold liquid and essentially prevents it from being transported outside each cell.

### Brief description of the drawings

The invention is now described, by way of example, with reference to the accompanying drawings, in which:

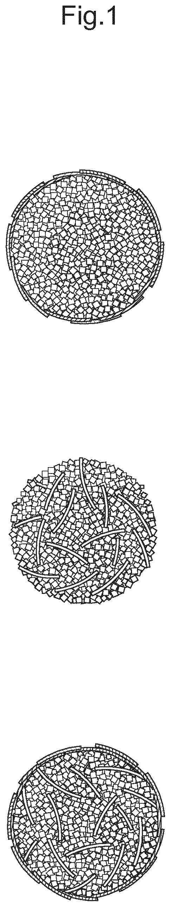

Fig. 1 shows a basic design of the material (cells) that constitute the material. Top: a piece of active substance shaped as a sphere with a coating of overlapping flakes, outside the scope of the invention, Middle: a piece of active substance comprising flakes, outside the scope of the invention, Bottom: a piece of active substance comprising flakes and with a coating of overlapping flakes, according to the invention. The material inside the cells is not drawn to scale and also the flakes of graphene and/or graphene oxide are not drawn to scale for improved clarity.

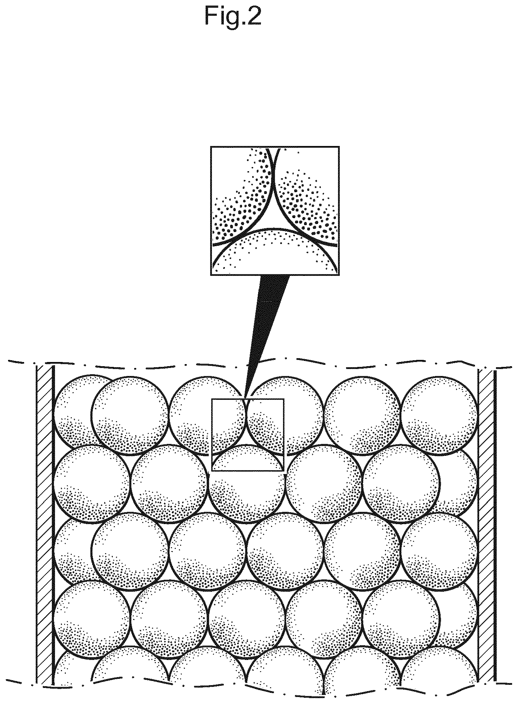

Fig 2 shows an embodiment where the material is in the form of spherical cells comprising active substance and wherein the cells are between two surfaces. The cells are in heat conducting contact with each other and the two surfaces.

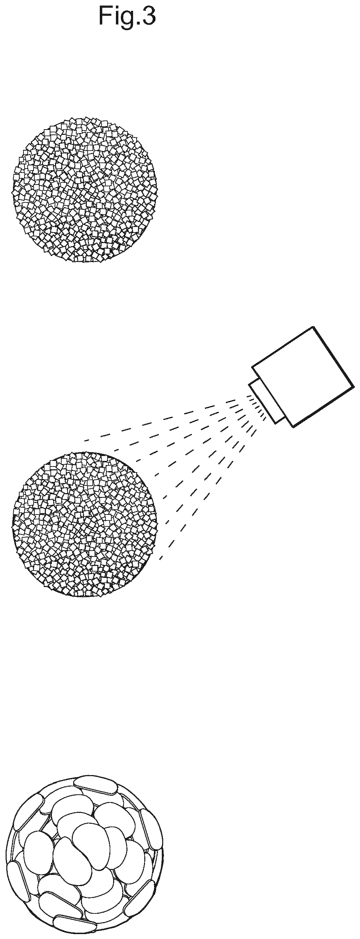

Fig 3 shows a method, outside the scope of the invention, of manufacturing the material (cells). The figure shows the manufacture of an individual cell which can be a part of a material. In the top picture a piece of active substance is provided, in the middle picture the flakes are applied and the bottom picture shows the completed cell with the cell wall comprising overlapping flakes. The material inside the cells is not drawn to scale and also the flakes of graphene and/or graphene oxide are not drawn to scale for improved clarity.

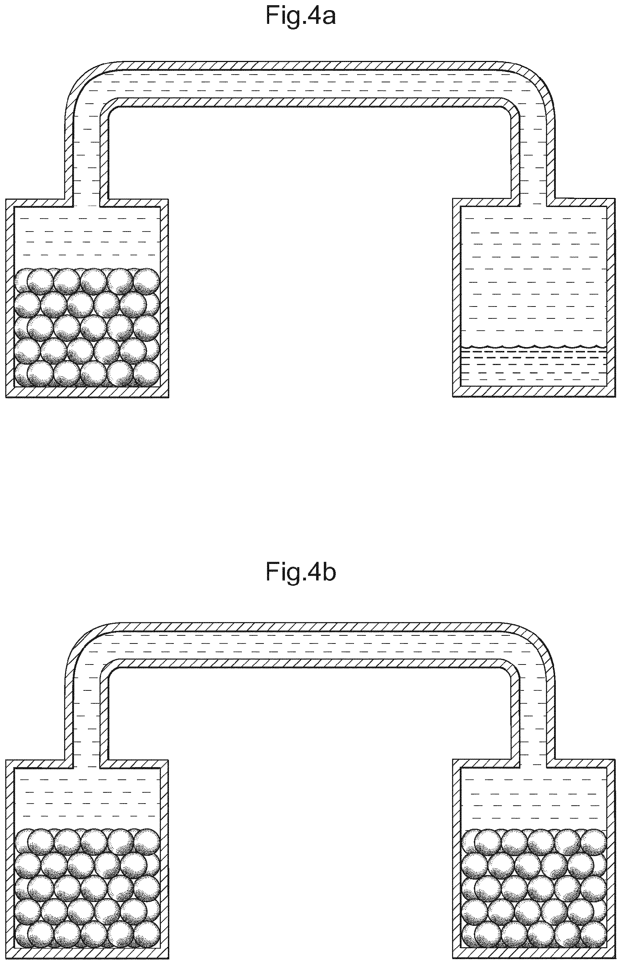

Fig 4a and b show two different embodiments of chemical heat pumps comprising the material in the form of spheres according to the invention. To the left there is the reactor part and to the right there is the evaporator/condenser part and they are connected by a passage allowing for exchange of gas between the reactor part and the evaporator/condenser part. A volatile liquid is residing inside the reactor part, the evaporator/condenser part and the passage. The material (i.e. the cells) is in Fig 4a in the reactor part and in Fig 4b both in the reactor part and in the evaporator/condenser part.

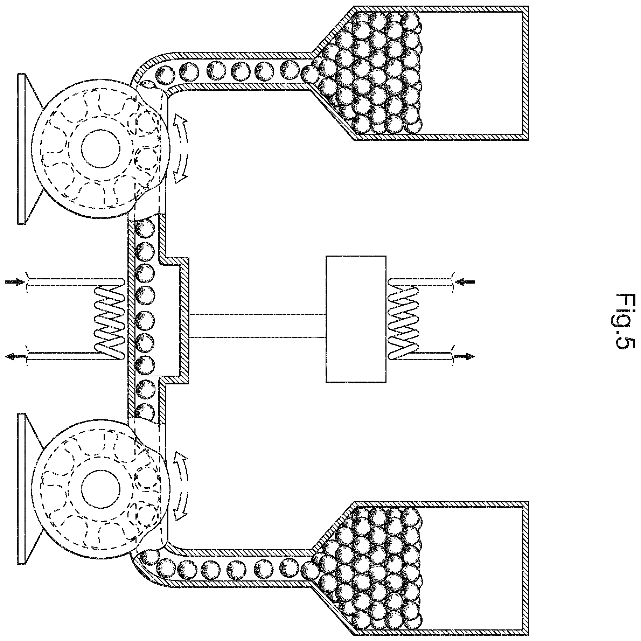

Fig 5 shows one embodiment with a system with a reactor and an evaporator/condenser both in thermal contact with two different surrounding systems indicated with heat exchanging spirals. The reactor part is further in connection with two different storage compartments for the material. In charging mode the reactor compartment is heated and the volatile liquid evaporated from the active substance and transferred from the material to the evaporator/condenser. When they are charged the material is transported away from the reactor to the storage compartment for charged material. In discharging mode the material is transported from the storage compartment for charged material to the reactor, where volatile liquid is absorbed by the active substance in the material. When discharged the material is transported to the storage compartment for discharged material.

### Detailed description

Before the invention is disclosed and described in detail, it is to be understood that this invention is not limited to particular compounds, configurations, method steps, substrates, and material disclosed herein as such compounds, configurations, method steps, substrates, and material may vary somewhat. It is also to be understood that the terminology employed herein is used for the purpose of describing particular embodiments only and is not intended to be limiting since the scope of the present invention is limited only by the appended claims.

It must be noted that, as used in this specification and the appended claims, the singular forms "a", "an" and "the" include plural referents unless the context clearly dictates otherwise.

If nothing else is defined, any terms and scientific terminology used herein are intended to have the meanings commonly understood by those of skill in the art to which this invention pertains.

Active substance as used herein denotes a substance which takes active part in the absorption process together with volatile liquid.

Matrix denotes a material which is essentially inert with respect to the volatile liquid but which is able to hold the active substance, both when the active substance is in solid phase and when the active substance has absorbed an amount of volatile liquid and become liquid.

Volatile liquid as used herein denotes a liquid with the ability to absorb and desorb from an active substance in a chemical heat pump. The volatile liquid can be both in liquid phase and gas phase.

The invention has the advantage to improve the conduction of heat to and from the active substance. The heat is transported from and to a surrounding system. The material used in the material is at least one selected from graphene and graphene oxide. In these material the heat conduction is good. Further these material can withstand the environment in a chemical heat pump with a salt as an active substance and varying temperature. In one embodiment the cell walls comprise graphite in addition to at least one selected from the group consisting of graphene and graphene oxide. Graphite can thus be mixed with the graphene and/or the graphene oxide.

The mechanical integrity is improved compared to the case where no material is utilized.

The ability to hold the active substance is improved, in particular when a lot of volatile liquid is absorbed so that it becomes at least partially liquid. The material makes it possible for the matrix to hold more active substance liquid. In an embodiment where the active substance and the volatile liquid form a liquid state an entirely material is preferably used. In an embodiment where the active substance and the volatile liquid form a solid state a material which is open can be used.

The active substance is in one embodiment held by the matrix and enclosed in the material. In an alternative embodiment the active substance only is enclosed by the material.

In one embodiment the size of the individual cells in the cell structure is in the range from 0.5 mm to 10 mm. In an alternative embodiment the size of the individual cells in the cell structure is in the range from 0.1 mm to 15 mm. The size of one individual cell is measured as the longest possible length of that cell in any direction. While essentially all cells are within the intended range the case may be that a few cells are not within this range due to for instance imperfections in the manufacturing process. Such situations are nevertheless also considered to be encompassed in the mentioned intervals. The fraction of number of cells outside the intended range is not higher than 5% of the total number of cells, preferably not higher than 1 % of the total number of cells.

In one embodiment the active substance is a salt. In one embodiment the salt is hygroscopic. In one embodiment the salt is selected from chlorides, chlorates, perchlorates, bromides, iodides, carbonates, and nitrates of lithium, magnesium, calcium, strontium, barium, cobalt, nickel, iron, zinc, manganese, potassium, and aluminum as well as sulphides and hydroxides of lithium, sodium and potassium. In another embodiment the salt is selected from Na₂S, LiBr, LiCI, CaCl₂, and CaBr₂. In one embodiment the salt is selected from magnesium chloride, zinc chloride, potassium carbonate, potassium hydroxide and sodium hydroxide. Where existing, all hydrated versions of all above salts are also encompassed. As a non-limiting example Na₂S^{∗}9H₂O is encompassed.

The size of the cells controls the properties regarding the power and energy content of the cell structure. Small cells generally give high power while large cells generally give high energy content. Thus the cell structure provides a further possibility to control the properties of the chemical heat pump.

By designing different cell structures it is possible to optimize the heat conduction to and from the different cells from and to the surroundings.

In one embodiment both the reactor part and the condenser/evaporator part comprise the material. In the prior art, attempts with some kind of active substance in both the reactor part and the condenser/evaporator part have not been successful because of factors including insufficient capacity to hold liquid and/or because of insufficient heat conducting capacity. The present material both in the reactor part and the condenser/evaporator part solves these problems and offer a number of advantages.

In an embodiment where there are several surfaces inside the reactor or the condenser/evaporator the material can extend between those surfaces. The surfaces are in thermal contact / heat exchanging contact with a surrounding system transferring heat to or from the cell structure during different phases of the operation. Due to the invention the distance between the surfaces can be increased so that the number of surfaces/plates can be reduced.

Different types of migration is reduced or even eliminated.

In thermally induced migration the solution of active substance (often a salt) is moving towards warmer parts. This is due to a transport of salt solution towards dried areas. If an area is dried quicker than other areas capillary and other forces drive a flow of solution of active substance towards those dried areas. After repeated evaporation the active substance becomes very concentrated in those areas. It can even lead to stone formation which is not very permeable for gas. The improved heat conduction of the material reduces or even eliminates this problem. In particular graphene has excellent heat conduction properties.

In gravity induced migration the gravitational force tend to concentrate the active substance similar to the case for thermally induced migration. Also the gravity induced migration is reduced or eliminated because the liquid essentially stays in each cell in the material. Thus gravity induced migration between and outside the cells is avoided.

In a first aspect there is provided a material for use in a chemical heat pump, as defined in claim 1, the material comprises an active substance, and allows transport of a volatile liquid in gas phase to and from at least a part of the active substance, wherein at least a part of the material is in thermal contact with the surroundings, wherein the material comprises flakes of at least one selected from the group consisting of graphene and graphene oxide, wherein each individual flake has a lateral size in the range 100-10000 nm and a thickness in the range 0.34 to 5 nm. The lateral size is measured at the largest possible lateral distance. The lateral direction is defined as the direction perpendicular to the direction in which the thickness is measured. The flakes of graphene and/or graphene oxide are sheet like structures making it easy to identify the lateral direction.

The material comprises a plurality of cells enclosing the active substance, wherein each of said cells having at least one cell wall, wherein one side of the cell walls is facing the active substance, and wherein the cell walls comprise a plurality of at least partially overlapping flakes. The enclosing cells offer a number of advantages for instance keeping the active substance securely in place.

The flakes are both in the cell walls and enclosed in the cells together with the enclosed active substance. Thus in the material comprising flakes, the flakes enclose the active substance and are also be mixed with the active substance. In fig 1 three alternatives are depicted, upper (outside the scope of the invention) with an enclosing cell wall comprising flakes, middle (outside the scope of the invention) with flakes mixed with the active substance without enclosing flakes, and lower (according to the invention) with an enclosing cell wall comprising flakes as well as flakes mixed with the active substance.

In one embodiment cells in the material comprises both the active substance and a matrix material. Such a matrix material serves to hold the active substance both in solid state, solution, and liquid phase. In one embodiment the matrix material holds the active substance by capillary force.

In one embodiment the at least one active substance is at least one selected from the group consisting of a salt and an oxide. In one embodiment the active substance is at least one selected from the group consisting of a salt and CaO. In one embodiment the active substance is at least one selected from the group consisting of chlorides, chlorates, perchlorates, bromides, iodides, carbonates, and nitrates of lithium, magnesium, calcium, strontium, barium, cobalt, nickel, iron, zinc, manganese, potassium, and aluminium as well as sulphides and hydroxides of lithium, sodium and potassium. In one embodiment the active substance is selected from the group consisting of Na₂S, LiBr, LiCI, CaCl₂, and CaBr₂.

In one embodiment the matrix comprises fibres. In one embodiment the material comprises a ceramic material.

In one embodiment the cells constitute a honeycomb structure. In an alternative embodiment the cells constitute a string shaped structure. In yet an embodiment the cells constitute a spiral shaped structure. In one embodiment the cells comprises at least one elongated electrically conducting core extending through at least two individual cells. In one embodiment the cells is a random structure. In one embodiment the cells are essentially spherical.

In one embodiment the size of the individual cells in the material is in the range from 0.5 mm to 10 mm.

In one embodiment the cell walls comprise graphite. This graphite is in addition to the flakes of graphene and/or graphene oxide.

In one embodiment the material is present as pieces surrounded by an outer coating comprising hydrophobic nanoparticles, wherein the hydrophobic nanoparticles have an average size from 1 to 50 µm. Thus in one hydrophobic nanoparticles serve as a coating on the outside. Such a coating can be applied both on the flakes and on the active substance itself if the outside is not coated with flakes. In one embodiment the hydrophobic nanoparticles comprise SiO₂, and are modified by covalently bound hydrophobic compounds.

In a second aspect there is provided a chemical heat pump, said chemical heat pump comprising:
a reactor part,
an evaporator/condenser part and
a passage connecting the reactor part and the evaporator/condenser part with each other allowing for exchange of gas between the reactor part and the evaporator/condenser part,
a volatile liquid residing inside the reactor part, the evaporator/condenser part and the passage, and
at least one active substance at least in the reactor part,
wherein the volatile liquid is adapted to be absorbed by the active substance at a first temperature and be desorbed by the active substance at a second higher temperature,
wherein the material as described above is at least in the reactor part, said material holds the active substance both in solid phase and in a liquid solution together with volatile liquid.

In one embodiment the material is both in the reactor part and in the evaporator/condenser part.

In a third aspect there is provided a chemical heat pump, said chemical heat pump comprising:
a first storage compartment and a second storage compartment, said first and second storage compartments being adapted to store the material as described above,
at least one reaction compartment adapted to transfer heat to and from the material, said at least one reaction compartment being adapted to receive volatile liquid released from the material during transfer of heat to the material and said at least one reaction compartment being adapted to distribute volatile liquid to the during transfer of heat from the material,
a transport means adapted to transport the material from the first storage compartment to the at least one reaction compartment and from the at least one reaction compartment to the second storage compartment, and from the second storage compartment to the at least one reaction compartment and from the at least one reaction compartment to the first storage compartment.

The advantage of the material in such a chemical heat pump it that the material has higher mechanical strength and durability and can thus easier be transported and stored.

In one embodiment the at least one reaction compartment comprises a first reaction compartment adapted to transfer heat to the material and a second reaction compartment adapted to transfer heat from the material.

The material is for instance in the reactor part and in contact with a surface for efficient heat exchange with the surrounding. The contact point(s) between a heat exchanger surface and the cell walls of graphene or graphene oxide transfer the heat efficiently.

In one embodiment there is material both in the reactor part and the evaporator/condenser part respectively. In one embodiment there are different active substances in the reactor part and the evaporator/condenser part respectively. This allows the designer to use more parameters to optimize the system because both the active substance and the type of matrix can be different which affect the properties and performance of the entire system.

This setup allows a large energy storage to be built up. The setup avoids problems with heat exchange in a large reactor with a lot of material storing energy.

In this embodiment a means for preventing volatile liquid from being transported from the reaction compartment to the storage compartments (and vice versa) is necessary.

In one embodiment the at least one reaction compartment comprises a first reaction compartment adapted to transfer heat to the material and a second reaction compartment adapted to transfer heat from the material. Thus it is possible to charge material and add to the first storage compartment simultaneously as material is discharged in another reaction compartment and are transferred to the second storage compartment.

In one embodiment the volatile liquid is at least one selected from H₂O, NH₃, H₂, and an alcohol. The selected alcohol must have a suitable boiling point with regard to the intended temperature and pressure range. The term an alcohol includes mixtures of more than one alcohol.

In a fourth aspect there is provided a method for manufacturing the material as described above, the method comprising the steps of:
providing an active substance
coating said active substance with flakes of at least one selected from the group consisting of graphene and graphene oxide.

In one embodiment a matrix material is mixed with the active substance before the coating. Such a matrix material serves to hold the active substance both in solid state, solution, and liquid phase. In one embodiment the matrix material holds the active substance by capillary force.

In one embodiment flakes of at least one selected from the group consisting of graphene and graphene oxide are mixed with the active substance before the coating..

In one embodiment the active substance before coating is particles each with a size in the range 0.5-10 mm.

In one embodiment the coating is performed using at least one selected from the group consisting of supersonic coating, ultrasonic coating, and spray coating. In one embodiment the coating is performed by applying an aqueous dispersion followed by evaporating.

In one embodiment the coating is performed by contacting at least one selected from the group consisting of graphene and graphene oxide with an adhesive surface and subsequently contacting the adhesive surface comprising at least one selected from the group consisting of graphene and graphene oxide with the active substance to obtain a coating on the active substance. In one embodiment the step of contacting the adhesive surface comprising at least one selected from the group consisting of graphene and graphene oxide with the active substance is repeated. In one embodiment the coated active substance is heated in order to evaporate remaining adhesive. In one embodiment the dispersion is applied using at least one selected from the group consisting of spraying and dipping.

In one embodiment the step of contacting the adhesive surface comprising at least one selected from the group consisting of graphene and graphene oxide with the active substance is repeated. The contacting is repeated until a sufficiently covering layer is obtained on the active substance. In one embodiment the coated active substance is heated in order to evaporate remaining adhesive. It can be expected that some residues of adhesive will also be transferred to the active substance. When the active substance is heated the adhesive is evaporated. An adhesive which evaporates upon heating should be selected if this option is desired. The cells can withstand temperatures up to about 600-700°C depending on the choice of the active substance inside for continuous use.

In one embodiment the material is annealed after coating at a temperature of 750°C or higher in order to create an improved layer of overlapping flakes at the surface.

In one embodiment the active substance is provided as a mixture with graphene flakes by mixing the active substance with graphite at sufficient mechanical energy to obtain active substance with graphene flakes.

In one embodiment the dispersion for coating comprises graphite in addition to at least one selected from the group consisting of graphene and graphene oxide.

There is further disclosed a material for use in a chemical heat pump, wherein the material comprises a plurality of cells enclosing an active substance, wherein each of said cells having at least one cell wall, wherein one side of the cell walls is facing the active substance, and wherein the cell walls comprise a plurality of at least partially overlapping flakes, wherein the cell walls allows transport of a volatile liquid in gas phase in and out of the cells, and wherein the material is in thermal contact with the surroundings.

The active substance is in direct contact with the flakes and the cell walls comprising overlapping flakes of at least one selected from the group consisting of graphene and graphene oxide, are not in powder or particulate form. Rather the graphene and/or graphene oxide is applied as a layer consisting of overlapping flakes as opposed to as particles in the prior art and WO 2012/118437.

In one embodiment the cells in the cell structure are closed and the cell walls are permeable for the volatile liquid in gas phase. A closed cell means that there are no holes so large that water or active substance in solution phase or liquid phase can escape. The overlapping flakes give a closed cell, although volatile liquid in gas phase can pass such a cell wall. This setup is preferred for water as volatile liquid, since water in gas phase can pass the cell wall of graphene or graphene oxide.

In an alternative embodiment the cell walls in the cell structure are open. The setup with open cells is suitable in particular when the volatile liquid and the active substance do not form a liquid in the cells. An example of such a volatile liquid and active substance (working pair) is NH₃ and a salt. The open structure can also be used when a matrix holds the active substance in the cells, which will prevent liquid from escaping from the open cells.

An advantage of CaO is that high temperatures can be utilized. The skilled person realizes that when CaO is utilized in a process involving H₂O, also Ca(OH)₂ is in the material at least during some conditions, thus also Ca(OH)₂ is encompassed within the term CaO.

In general any salt can be used. The salt is an ionic compound. In one embodiment the salt is in a dry state. In an alternative embodiment the salt is hydrated, i.e. the salt contains water molecules inside the crystal lattice. In yet another embodiment the salt is dissolved at least partially in water.

In one embodiment the at least one active substance is selected from a salt and an oxide. In one embodiment the at least one active substance is a salt. Examples of salt include but are not limited to LiCl, LiBr, Lil, MgCl₂, MgBr₂, Mgl₂, CaCl₂, CaBr₂, Cal₂, Srl₂, KOH, NaOH, ZnCl₂, ZnBr₂, Znl₂, AlCl₃, AlBr₃ and All₃. In one embodiment the at least one active substance is at least one selected from the group consisting of LiCl, LiBr, Lil, MgCl₂, MgBr₂, Mgl₂, CaCl₂, CaBr₂, Cal₂, Srl₂, KOH, NaOH, ZnCl₂, ZnBr₂, Znl₂, AlCl₃, AlBr₃ and All₃.

In one embodiment the at least one active substance is at least one selected from the group consisting of a salt and an oxide. In one embodiment the active substance is at least one selected from the group consisting of a salt and CaO. In one embodiment the active substance is at least one selected from the group consisting of chlorides, chlorates, perchlorates, bromides, iodides, carbonates, and nitrates of lithium, magnesium, calcium, strontium, barium, cobalt, nickel, iron, zinc, manganese, potassium, and aluminum as well as sulphides and hydroxides of lithium, sodium and potassium. In one embodiment the active substance is selected from the group consisting of Na₂S, LiBr, LiCl, CaCl₂, and CaBr₂.

In one embodiment the matrix exerts a capillary force on the volatile liquid in liquid phase. In one embodiment the matrix comprises fibers. In one embodiment the matrix is a porous material with the ability of exerting capillary force on the volatile liquid. The active substance can be at least partially dissolved in the volatile liquid. In one embodiment the matrix comprises fibers. Fibers should have capillary properties so that they can hold the volatile liquid in liquid phase. Liquid includes a liquid solution of active substance in the volatile liquid. In one embodiment the matrix has a structure exerting capillary force to the volatile liquid in liquid phase. In one embodiment the matrix comprises pores with a diameter in the interval 10-60 µm. In one embodiment the matrix material comprises Superwool®. Superwool® is a glass fiber material with ability to withstand high temperatures. In one embodiment the matrix material comprises glass fibers.

The cell structure can be made in many different geometric patterns. In one embodiment the cell structure comprises a honeycomb structure. In one embodiment the cell structure comprises a string shaped structure. In one embodiment the cell structure comprises a spiral shaped structure. In one embodiment the cell structure comprises at least one elongated electrically conducting core extending through at least two individual cells. In one embodiment the cell structure is a random structure. In one embodiment the cell structure comprises essentially spherical individual cells.

In one embodiment the size of the individual cells in the material is in the range from 0.5 mm to 10 mm.

Where it is stated that it is possible to use different active substances, matrix material, and material in the reactor part and the evaporator/condenser part respectively it is implied that it is also possible to use the same active substances, matrix material, and cell structures in the reactor part and the evaporator/condenser part respectively.

Cell walls in the material comprising overlapping flakes of graphene or graphene oxide are particularly suitable for reducing or even eliminating migration by liquid droplets. Cell walls of graphene or graphene oxide can prevent migration of active substance such as a salt in the volatile liquid. A cell wall comprising overlapping flakes of graphene or graphene oxide will effectively reduce or even eliminate contamination problems in the chemical heat pump.

The material is in thermal contact with the surroundings. Thus heat can be transferred from the reaction with the active substance/volatile liquid to the optional matrix, and further to the cell structure and further to a surrounding system. Heat can of course also be transferred in the other direction from the surrounding system to the material, further to the optional matrix and further to the active substance/volatile liquid.

The purpose with the material is to provide a place where a ligand (volatile liquid, such as water in one embodiment) can manifest energy stemming from its enthalpy along with a chemical reaction. The purpose with the cell walls is both to define the cell as well as acting as bridges to transport ligand (volatile liquid) and thermal energy.

Other features and uses of the invention and their associated advantages will be evident to a person skilled in the art upon reading the description and the examples.

### Examples

To increase the heat conductivity in the material graphene coatings were performed. The following parameters have been considered: Operating simplicity, cost, and even coating quality.

Dip coating can fabricate a film with a complex shape and large area and it is also easily realized in industry. The objective was to manufacture a graphene coating on the chosen matrix material.

### Equipment

- Graphene (aq) suspension at a concentration of 1g/L graphene nanoplatelets, i.e. flakes, stabilised by an anionic surfactant in water. The individual graphene nano-platelets are approximately between 500 nm and 1 micron in size. The viscosity is approximately 2-3 cps.
- Matrix material (paper and ceramic fiber)
- Petri test bowls
- Oven
- Quarts pipe (reactor)
- Sample holder
- Vacuum pump
- Gas flow indicator
- Nitrogen gas
- Arcal gas
- Hydrogen gas (for reducing atmosphere)

### Test description

Three substrates were used:
Filter paper
AlOx wool (Saffil) - burnt/purified
Neoceram

All substrates is put on the bottom of a petri bowl. Graphene suspension is filled into the petri bowl (2 mm above the substrate).

The petri bowl is placed in an oven (80 °C) to make solute of the suspension to dry.

Sample pieces (dried with graphene suspension) of filter paper, saffil and neoceram were placed in reactor tubes.

Samples were taken out at 200°C, 750°C and 1000°C.

After annealing, the filter paper substrates were crumbled. This indicates that no coherent graphene layer has been created since this should have kept the structure together.

### Results

### Electrical conductivity

The electrical conductivity was measured utilizing an Ohm meter. The results from the coating of Saffil and Neoceram are shown in table 1. All samples were measured five times at different measuring spots.

**Table 1: Resistance measurements of samples annealed at different temperatures.**

| | Ohm/mm | Ohm/mm |
|---|---|---|
| Oven temperature °C | Neoceram | Saffil |
| 80 | 90.40 | 394.67 |
| 200 | 54.80 | 432.00 |
| 750 | 3.69 | 9.03 |
| 1000 | 3.13 | 2.57 |

As can be seen, the resistance reaches very low values (higher conductivity) when annealing at 750 °C and up.

### Thermal conductivity

Thermal conductivity measurements were performed using transient plan source measurement.

The transient plane source method is used to measure the thermal diffusicity in combination with the thermal conductivity.

Un-coated AlOx wool (saffil) showed a conductivity of 30 mW/mK.

Single dipped/coated AlOx wool (saffil) showed a conductivity of 65-80 mW/mK.

Thus an increase in the thermal conductivity of 2.5 times was observed only when coating a single time, by means of dip and dry coating methodology.

### Spray coating

The objective was to ultrasonically coat filter paper and alphawool substrates with a graphene (aq) dispersion. Ideal coating is one where flakes overlap to form continuous coverage and connection. Penetration of material is desired into the wool. This is to be determined by imaging under an optical microscope and measuring electrical conductivity.

### Equipment

FlexiCoat XYZ gantry system
Ultrasonic Spray Nozzle(s)
120 kHz Impact (P/N:06-04-00157, S/N: 120-00246)
Sono-Tek Syringe pump TI
(VOLUME) ml Hamilton Gastight syringe
1/8 inch outer diameter Teflon® Tubing

### Substrate(s):

- Filter paper (fine and coarse)
- Alphawool (in approximately 1mm thick layers)

### Chemical(s):

### Graphene dispersion (AQ) - Elicarb/Thomas Swan

Graphene (aq) suspension at a concentration of 1g/L graphene nanoplatelets, i.e. flakes, stabilised by an anionic surfactant in water. The individual graphene nano-platelets are approximately between 500 nm and 1 micron in size. The viscosity is approximately 2-3 cps.

### Testing Equipment:

Nikon Eclipse LV100ND Optical Microscope
Multimeter (resistance measurements)

### Test description

The dispersion is agitated for 30 seconds in an ultrasonic bath and lightly shaking before withdrawing any material from the main container.

The selected impact nozzle is set up at the lowest mounting location in the gantry system.

The substrate is placed in the machine in a repeatable pattern

A corresponding coating routine for the position and desired quantity of material to be deposited.

The syringe is filled with material (after lightly shaking the parent bottle) and dispensed in the selected area routine.

The process is adjusted based on the results as measured by laboratory equipment.

The iterating is continued on the process until the desired coating is reached.

After coating a soft annealing is performed at 200 °C for 8 hours.

### Coating process parameters

During the coating process, several different parameters are varied. These are described as:
Wet/dry
Heating of substrate
Flow rate
Wet vs. dry coating

During the setup stages, a range of coatings considered wet or dry were tried. The end thickness require multiple layers and the process is suitable for multiple passes.

Coatings that deposited too much material in a single pass flooded the substrate. This did not allow for material to remain on the top of most surfaces and blocked penetration of subsequent passes if not allowed to dry in between.

### Heating of substrate

To reduce the needed process time, the substrates were heated using an integrated heat plate, on which the substrates were placed during coating. This allowed the substrates to dry in less time between layers.

### Flow rate variation

When depositing material the filter paper had the tendency to expand and buckle upwards. This was reduced by using lower flow rates and a heated surface directly underneath.

Alphaboard: This was a very large piece of material. Even in a more manageable size, it is unlikely to have any notable penetration. This is because the material was extremely dense. No samples were attempted.

### Results

### Samples 4A: (180 pass)

### 3 lines at this deposition. 3 samples cut from each line. (Line 180-1, 180-2, etc. as labels)

A larger sheet was prepared to allow multiple samples to be deposited during a single process. Following the coating and baking, samples were cut to size and labeled for shipping.

Multiple passes over the substrate were necessary for the desired deposition. Depositing material over a larger area allowed for continuous deposition onto the substrate.

Heating the substrate was necessary to reduce downtime between layers on the same area.

### Samples 4B: (360 pass)

### 3 lines at this deposition. 3 samples cut from each line. (Line 360-1, 360-2, etc. as labels)

This was done in the same manner as Samples 4A with twice as many layers deposited.

### Samples 5: (Alphawool - both sides coated)

The wool was difficult to separate into separate sheets. Approximately 1mm thick layers were used in testing. Penetration was limited by close weave of fibers. Beyond a few layers down into the weave few openings exist that would allow a droplet to pass without being captured. Deposited material needed time to dry before the next layer was deposited. When layers were deposited too quickly, liquid collected on top and did not penetrate into the wool. This also would cause material to run off of the top fibers.

### Samples 6, 7, and 8:

These three samples were prepared with the same process to allow for direct comparison between the three substrates. Like all other samples prepared, the 120 KHz impact nozzle was passed over the substrates in a single line pattern for material deposition.

### Processing Spray coating of Elicarb

For the spray coating tests the Elicarb bought from Thomas Swan was used. The material atomized easily and stayed in suspension very well. There is no observable reason to need mixing systems for this chemistry, however less stable dispersions may require this.

### Electrical conductivity results post soft annealing

All values obtained were very dependent on how the probe was held to the substrate. No uncoated substrate showed conductivity. All coated samples showed some degree of conductivity. Probes were approximately 3mm apart on the substrate. All values recorded are in kilo ohms.

| | | | | | | |
|---|---|---|---|---|---|---|
| Substrate Description | filter paper fine sheet, cut after | filter paper fine sheet, cut after | 1mm layer wool | 1mm layer wool | filter paper - fine | filter paper - coarse |
| Chemistry Description | graphene dispers ion (AQ) | graphene dispersion (AQ) | graphene dispersion (AQ) | graphene dispersion (AQ) | graphene dispersion (AQ) | graphene dispersion (AQ) |
| Coats (passes) | 180 | 360 | 180 | 360 | 360 | 360 |
| Process Time [min] | | | | 15 sec/pass | | |
| Volume dispensed (ml) | 20.37 | 40.64 | 17.02 per side | 34.02 across samples 6, 7, and 8 | | |
| Resistance measurements (approx.) | 180-1: 12.25K ohm, 180-2: 2.59K ohm, 180-3: 5.74K ohm | 360-1 : 0.469K ohm, 360-2: 0.492K ohm, 360-3: 0.608K ohm | 116.8, 87.2, and 112.4 K ohm | 32.59K ohm | 10.80 K ohm | 4.04 K ohm |

As can be seen by increasing the number of passes through the coating/spraying, the electric resistance decreases and becomes more stable. When comparing 180 vs 360 samples of the fine filter paper, the average for the 180 passes is 6,9 kΩ while the average for the 360 passes is 0,5 kΩ.

When comparing the 180 vs 360 samples for the wool the average for the 180 passes is 115,4 kΩ while the average for the 360 passes is 32,6 kΩ.

Furthermore when comparing the filter paper types (fine and coarse) it is shown that the electrical resistance is somewhat lower for the coated coarse paper, 4,0 kΩ compared to 10,8 kΩ.Thus, it seems like the coarse filter paper shows better adhesion properties with the graphene flakes.

When measuring on the reference sample, represented by uncoated filter paper and uncoated wool, these showed infinite resistance.

### Integration of graphene in all types of salts

By integrating graphene flakes into the salt crystal body, the thermal conductivity can be enhanced by the presence of graphene flakes at the same length as the diameter of the crystal. Graphene is formed out of a certain amount of graphite flakes submerged in water. By adding a quantity of surfactant along with mechanical stirring at high speed, the graphite flakes fall apart into one to ten atom layer thickness of graphene flakes. The graphene flakes are evenly distributed in the resulting suspension. By adding soluble salt to the suspension a new salt solution with evenly distributed graphene flakes is formed. Finally, to achieve an encapsulation of salt and graphene, nano particles are added to the suspension. Again the suspension is exposed to mechanical stirring at high speed. Thereby roughly half a millimetre particles are formed with the help of van der Waal forces in a similar way to dry water formation. In a drying process the water is taken away from the particle and graphene salt integrated particles are formed. These particles has been tested as a substitute to salt without any preparation and found to be able to store and release more energy per time unit compared to ordinary salt.

## Claims

1. A material for use in a chemical heat pump, the material comprising a plurality of individual cells enclosing an active substance, wherein:
- at least a part of the material can be in thermal contact with the surroundings;
- each of said cells has at least one cell wall, wherein one side of the cell walls is facing the active substance, and wherein the cell walls comprise a plurality of at least partially overlapping flakes;
- the active substance is capable of being active in an adsorption process together with a volatile liquid and the active substance is selected from the group consisting of a salt and an oxide;
- the overlapping flakes form closed cells, so that there are no holes so large that water or active substance in solution phase or liquid phase can escape, and the cell walls are permeable for the volatile liquid in gas phase, so that transport of a volatile liquid in gas phase to and from at least a part of the active substance is allowed;
- the overlapping flakes are selected from the group consisting of graphene and graphene oxide and are in direct contact with the active substance, so as to obtain a good heat conduction, wherein each individual flake has a lateral size in the range 100-10000 nm and a thickness in the range 0.34 nm to 5 nm;
- the flakes are both in the cell walls and enclosed in the cells together with the active substance.

2. The material according to claim 1, wherein cells in the material comprises both the active substance and a matrix material.

3. The material according to any one of claims 1-2, wherein the active substance is at least one selected from the group consisting of a salt and CaO.

4. The material according to any one of claims 1-3, wherein the active substance is at least one selected from the group consisting of chlorides, chlorates, perchlorates, bromides, iodides, carbonates, and nitrates of lithium, magnesium, calcium, strontium, barium, cobalt, nickel, iron, zinc, manganese, potassium, and aluminium as well as sulphides and hydroxides of lithium, sodium and potassium.

5. The material according to any one of claims 1-4, wherein the active substance is selected from the group consisting of Na₂S, LiBr, LiCI, CaCl₂, and CaBr₂.

6. The material according to claim 1, wherein the size of the individual cells in the material is in the range from 0.5 mm to 10 mm.

7. The material according to any one of claims 1-6, wherein the material is present as pieces surrounded by an outer coating comprising hydrophobic nanoparticles, wherein the hydrophobic nanoparticles have an average size from 1 to 50 µm.

8. A chemical heat pump, said chemical heat pump comprising:
a reactor part,
an evaporator/condenser part and
a passage connecting the reactor part and the evaporator/condenser part with each other allowing for exchange of gas between the reactor part and the evaporator/condenser part,
a volatile liquid residing inside the reactor part, the evaporator/condenser part and the passage, and
at least one active substance at least in the reactor part,
wherein the volatile liquid is adapted to be absorbed by the active substance at a first temperature and be desorbed by the active substance at a second higher temperature,
wherein the material according to any one of claims 1-7 is at least in the reactor part, said material holds the active substance both in solid phase and in a liquid solution together with volatile liquid.

9. The chemical heat pump according to claim 8, wherein the material is both in the reactor part and in the evaporator/condenser part.

10. The chemical heat pump according to any one of claims 8-9 wherein the volatile liquid is at least one selected from H₂O, NH₃, H₂, and an alcohol.

11. A method for manufacturing the material according to any one of claims 1-7, the method comprising the steps of:
providing an active substance
coating said active substance with flakes of at least one selected from the group consisting of graphene and graphene oxide.

12. The method according to claim 11, wherein flakes of at least one selected from the group consisting of graphene and graphene oxide are mixed with the active substance before the coating.

13. The method according to any one of claims 11-12, wherein the material is annealed after coating at a temperature of 750 °C or higher.

## Patentansprüche

1. Material zur Verwendung in einer chemischen Wärmepumpe, wobei das Material eine Vielzahl von Einzelzellen umfasst, die eine aktive Substanz umschließen, wobei:
- mindestens ein Teil des Materials in thermischem Kontakt mit der Umgebung stehen kann;
- jede der Zellen mindestens eine Zellwand aufweist, wobei eine Seite der Zellwände der aktiven Substanz zugewandt ist, und wobei die Zellwände eine Vielzahl von zumindest teilweise überlappenden Flocken aufweisen;
- die aktive Substanz in der Lage ist, in einem Adsorptionsprozess zusammen mit einer flüchtigen Flüssigkeit aktiv zu sein, und die aktive Substanz ausgewählt ist aus der Gruppe bestehend aus einem Salz und einem Oxid;
- die überlappenden Flocken geschlossene Zellen bilden, so dass keine so großen Löcher vorhanden sind, dass Wasser oder aktive Substanz in der Lösungs- oder Flüssigphase entweichen kann, und die Zellwände für die flüchtige Flüssigkeit in der Gasphase durchlässig sind, so dass der Transport einer flüchtigen Flüssigkeit in der Gasphase zu und von mindestens einem Teil der aktiven Substanz ermöglicht wird;
- die überlappenden Flocken ausgewählt sind aus der Gruppe bestehend aus Graphen und Graphenoxid und in direktem Kontakt mit der aktiven Substanz stehen, um eine gute Wärmeleitung zu erhalten, wobei jede einzelne Flocke eine laterale Größe im Bereich von 100-10000 nm und eine Dicke im Bereich von 0,34 nm bis 5 nm aufweist;
- die Flocken befinden sich sowohl in den Zellwänden als auch zusammen mit der aktiven Substanz in den Zellen eingeschlossen.

2. Material nach Anspruch 1, wobei Zellen in dem Material sowohl die aktive Substanz als auch ein Matrixmaterial umfassen.

3. Material nach einem der Ansprüche 1-2, wobei die aktive Substanz mindestens eine ist, ausgewählt aus der Gruppe bestehend aus einem Salz und CaO.

4. Material nach einem der Ansprüche 1 -3, wobei die aktive Substanz mindestens eine ist, ausgewählt aus der Gruppe bestehend aus Chloriden, Chloraten, Perchloraten, Bromiden, Jodiden, Carbonaten und Nitraten von Lithium, Magnesium, Kalzium, Strontium, Barium, Kobalt, Nickel, Eisen, Zink, Mangan, Kalium und Aluminium sowie Sulfiden und Hydroxiden von Lithium, Natrium und Kalium.

5. Material nach einem der Ansprüche 1-4, wobei die aktive Substanz ausgewählt ist aus der Gruppe bestehend aus Na₂S, LiBr, LiCl, CaCl₂ und CaBr₂.

6. Material nach Anspruch 1, wobei die Größe der einzelnen Zellen im Material im Bereich von 0,5 mm bis 10 mm liegt.

7. Material nach einem der Ansprüche 1-6, wobei das Material als Teile vorliegt, die von einer äußeren Beschichtung umgeben sind, die hydrophobe Nanopartikel umfasst, wobei die hydrophoben Nanopartikel eine durchschnittliche Größe von 1 bis 50 µm aufweisen.

8. Chemische Wärmepumpe, wobei die chemische Wärmepumpe umfasst:
ein Reaktorteil,
einen Verdampfer/Kondensatorteil und
einen Durchgang, der den Reaktorteil und den Verdampfer/Kondensatorteil miteinander verbindet und einen Gasaustausch zwischen dem Reaktorteil und dem Verdampfer/Kondensatorteil ermöglicht,
eine flüchtige Flüssigkeit, die sich im Inneren des Reaktorteils, des Verdampfer/Kondensatorteils und des Durchgangs befindet, und
mindestens eine aktive Substanz mindestens im Reaktorteil,
wobei die flüchtige Flüssigkeit angepasst ist, um von der aktiven Substanz bei einer ersten Temperatur absorbiert zu werden und von der aktiven Substanz bei einer zweiten höheren Temperatur desorbiert zu werden,
wobei das Material nach einem der Ansprüche 1-7 mindestens im Reaktorteil ist, wobei das Material die aktive Substanz sowohl in fester Phase als auch in einer flüssigen Lösung zusammen mit flüchtiger Flüssigkeit hält.

9. Chemische Wärmepumpe nach Anspruch 8, wobei sich das Material sowohl im Reaktorteil als auch im Verdampfer/Kondensatorteil befindet.

10. Chemische Wärmepumpe nach einem der Ansprüche 8-9, wobei die flüchtige Flüssigkeit mindestens eine ist, ausgewählt aus H₂O, NH₃, H₂ und einem Alkohol.

11. Verfahren zur Herstellung des Materials nach einem der Ansprüche 1-7, wobei das Verfahren die folgenden Schritte umfasst:
Bereitstellung einer aktiven Substanz,
Beschichten der aktiven Substanz mit Flocken von mindestens einem, ausgewählt aus der Gruppe bestehend aus Graphen und Graphenoxid.

12. Verfahren nach Anspruch 11, wobei Flocken von mindestens einem, ausgewählt aus der Gruppe bestehend aus Graphen und Graphenoxid, vor der Beschichtung mit der aktiven Substanz vermischt werden.

13. Verfahren nach einem der Ansprüche 11-12, wobei das Material nach dem Beschichten bei einer Temperatur von 750 °C oder höher getempert wird.

## Revendications

1. Matériau pour une utilisation dans une pompe à chaleur chimique, le matériau comprenant une pluralité de cellules individuelles contenant une substance active, dans lequel :
- au moins une partie du matériau peut être en contact thermique avec les environs ;
- chacune desdites cellules a au moins une paroi de cellule, dans lequel un côté des parois de cellule fait face à la substance active, et dans lequel les parois de cellule comprennent une pluralité de flocons se chevauchant au moins partiellement ;
- la substance active peut être active dans un procédé d'adsorption conjointement avec un liquide volatil et la substance active est choisie dans le groupe comprenant un sel et un oxyde ;
- les flocons se chevauchant forment des cellules fermées, de façon à ce qu'il n'y ait pas de trous si grands que de l'eau ou une substance active en phase soluble ou phase liquide puissent fuir, et les parois de cellule sont perméables au liquide volatil en phase gazeuse, de façon à ce qu'un transport d'un liquide volatil en phase gazeuse jusqu'à et à partir d'au moins une partie de la substance active soit permis ;
- les flocons se chevauchant sont choisis dans le groupe comprenant du graphène et de l'oxyde de graphène et sont en contact direct avec la substance active, de façon à obtenir une bonne conduction thermique, dans lequel chaque flocon individuel a une taille latérale dans la plage de 100 à 10 000 nm et une épaisseur dans la plage de 0,34 nm à 5 nm ;
- les flocons sont à la fois dans les parois de cellule et contenus dans les cellules conjointement avec la substance active.

2. Matériau selon la revendication 1, dans lequel des cellules dans le matériau comprennent à la fois la substance active et un matériau de matrice.

3. Matériau selon l'une quelconque des revendications 1 et 2, dans lequel la substance active est au moins un choisi dans le groupe comprenant un sel et du CaO.

4. Matériau selon l'une quelconque des revendications 1 à 3, dans lequel la substance active est au moins un choisi dans le groupe comprenant des chlorures, des chlorates, des perchlorates, des bromures, des iodures, des carbonates, et des nitrates de lithium, magnésium, calcium, strontium, baryum, cobalt, nickel, fer, zinc, manganèse, potassium, et aluminium ainsi que des sulfures et des hydroxydes de lithium, sodium et potassium.

5. Matériau selon l'une quelconque des revendications 1 à 4, dans lequel la substance active est choisie dans le groupe comprenant du Na₂S, du LiBr, du LiCl, du CaCl₂, et du CaBr₂.

6. Matériau selon la revendication 1, dans lequel la taille des cellules individuelles dans le matériau est dans la plage de 0,5 mm à 10 mm.

7. Matériau selon l'une quelconque des revendications 1 à 6, dans lequel le matériau est présent sous la forme de morceaux entourés d'un revêtement extérieur comprenant des nanoparticules hydrophobes, dans lequel les nanoparticules hydrophobes ont une taille moyenne de 1 à 50 µm.

8. Pompe à chaleur chimique, ladite pompe à chaleur chimique comprenant :
une partie réacteur,
une partie évaporateur/condenseur et
un passage reliant la partie réacteur et la partie évaporateur/condenseur l'une à l'autre permettant un échange de gaz entre la partie réacteur et la partie évaporateur/condenseur,
un liquide volatil résidant à l'intérieur de la partie réacteur, de la partie évaporateur/condenseur et du passage, et
au moins une substance active au moins dans la partie réacteur,
dans laquelle le liquide volatil est adapté pour être absorbé par la substance active à une première température et être désorbé par la substance active à une seconde température plus élevée,
dans laquelle le matériau selon l'une quelconque des revendications 1 à 7 est au moins dans la partie réacteur, ledit matériau retient la substance active à la fois en phase solide et dans une solution liquide conjointement avec un liquide volatil.

9. Pompe à chaleur chimique selon la revendication 8, dans laquelle le matériau est à la fois dans la partie réacteur et dans la partie évaporateur/condenseur.

10. Pompe à chaleur chimique selon l'une quelconque des revendications 8 et 9 dans laquelle le liquide volatil est au moins un choisi parmi l'H₂O, le NH₃, l'H₂, et un alcool.

11. Procédé permettant de fabriquer le matériau selon l'une quelconque des revendications 1 à 7, le procédé comprenant les étapes consistant à :
fournir une substance active
revêtir ladite substance active de flocons d'au moins un choisi dans le groupe comprenant du graphène et de l'oxyde de graphène.

12. Procédé selon la revendication 11, dans lequel des flocons d'au moins un choisi dans le groupe comprenant du graphène et de l'oxyde de graphène sont mélangés à la substance active avant le revêtement.

13. Procédé selon l'une quelconque des revendications 11 et 12, dans lequel le matériau est recuit après un revêtement à une température de 750 °C ou plus.
